# EUROPEAN PATENT SPECIFICATION

(11) **EP 4 270 908 B1**
(45) Date of publication and mention of the grant of the patent: **04.03.2026**
(21) Application number: 22738957.4
(22) Date of filing: 10.01.2022
(51) Int. Cl.: H04M 1/02, G06F 1/16

(54) **ELECTRONIC DEVICE, AND CONTROL METHOD AND CONTROL DEVICE THEREOF**
ELEKTRONISCHE VORRICHTUNG UND STEUERUNGSVERFAHREN UND STEUERUNGSVORRICHTUNG DAFÜR
DISPOSITIF ÉLECTRONIQUE, PROCÉDÉ DE COMMANDE ET DISPOSITIF DE COMMANDE DE CELUI-CI

(30) Priority: 14.01.2021 CN 202110048806
(43) Date of publication of application: 01.11.2023
(73) Proprietor: Vivo Mobile Communication Co., Ltd., Dongguan, Guangdong 523863 (CN)
(72) Inventor: DU, Xianhe, Dongguan, Guangdong 523863 (CN); YE, Wei, Dongguan, Guangdong 523863 (CN); LIU, Mingjian, Dongguan, Guangdong 523863 (CN); WANG, Fen, Dongguan, Guangdong 523863 (CN)
(74) Representative: Murgitroyd & Company
(86) International application number: PCT/CN2022/070986
(87) International publication number: WO 2022/152076

(56) References cited:
- CN-A- 109 756 594
- CN-A- 110 879 671
- CN-A- 111 277 685
- CN-A- 111 739 414
- CN-A- 111 966 234
- CN-A- 112 291 457
- CN-A- 112 714 209
- CN-A- 112 887 534
- US-A1- 2019 373 151
- US-A1- 2022 261 043

## Description

### TECHNICAL FIELD

This application relates to the technical field of communication devices, and more particularly relates to an electronic device and a control method and a control apparatus thereof.

### BACKGROUND

With the development of electronic devices, the electronic devices with a high screen-to-body ratio are increasingly popular with consumers. Increasing the screen-to-body ratio of the electronic devices has become a new development trend.

In order to retrain a front-facing camera while the screen-to-body ratio of the electronic device is increased, there are several designs, such as a notch screen, a hole-punch screen, a pop-up front-facing camera and an under-display camera on the market at present. But, images are not displayed in screen parts, which are notch or punch-hole, of the front-facing cameras designed in the manner of the notch screen and the hole-punch screen, which influences the display effect of the electronic devices to a certain degree. The pop-up front-facing camera guarantees a display area of the screen, but the time duration from camera pop-up to image acquiring is long. The design of the under-display camera solves the problems about the electronic device display area and the image feedback time, but the screen where the camera is located requires high light transmittance, which will make the number of display components at the camera reduced, and then influence the display effect.

Document CN 111739414 A discloses a display device, which includes a camera 2 and a flexible display panel 3. Among them, the display device body 1 is a collection of components other than the camera 2 and the flexible display panel 3.

Document CN 110879671 A discloses an electronic device, which includes a screen 100, flexible threads rod 210, at least two support blocks 220.

### SUMMARY

This application discloses an electronic device and a control method and a control apparatus thereof, so as to solve a display problem caused by arrangement of a front-facing camera of a current electronic device.

To solve the above problem, this application adopts following technical solutions:

In a first aspect, as defined in independent claim 1, an embodiment of this application discloses an electronic device, including a housing, a display screen, a deformation driving part and a camera module, where the display screen is disposed on the housing, a device inner cavity is formed by the display screen and the housing, the camera module and the deformation driving part are both disposed in the device inner cavity, the display screen includes a first region and a second region which are connected, a display surface of the first region is a first plane, the second region is located on an edge of the display screen, a portion of the second region is a deformable region, the deformation driving part is connected to the deformable region, and drives, through deformation, the deformable region to be switched between a flattening state and a bending state, and when the deformable region is in the flattening state, a display surface of the deformable region is a second plane, and the second plane and the first plane are located within the same plane; and when the deformable region is in the bending state, the deformable region is a curved surface, a light transmitting region is arranged in the deformable region, and when the deformable region is in the flattening state, ambient light passing through the light transmitting region is projected to the camera module.

The electronic device is characterised by a first reflective member being disposed between the light transmitting region and the camera module, the first reflective member is connected to the deformation driving part, the deformation driving part drives the first reflective member to move to a working position, and the ambient light passing through the light transmitting region is reflected by the first reflective member at the working position to the camera module.

In a second aspect, as defined in independent claim 13, an embodiment of this application discloses a control method of an electronic device. The electronic device is the electronic device according to the first aspect. The control method includes: receiving an input; controlling, when the input is a first input, the deformation driving part to drive the deformable region to be in the flattening state and controlling the camera module to shoot; and controlling, when the input is a second input, the deformation driving part to drive the deformable region to be in the bending state.

Further advantageous features are defined in dependent claims 2 to 12.

In a third aspect, an embodiment of this application discloses a control apparatus of an electronic device. The electronic device is the electronic device according to the first aspect. The control apparatus includes: a receiving module, configured to receive an input; a first control module, configured to control, when the input is a first input, the deformation driving part to drive the deformable region to be in the flattening state and control the camera module to shoot; and a second control module, configured to control, when the input is a second input, the deformation driving part to drive the deformable region to be in the bending state.

In a fourth aspect, an embodiment of this application discloses a terminal device, including a processor, a memory, and a program or an instruction stored in the memory and executable on the processor, and when the program or instruction is executed by the processor, the steps of the control method according to the second aspect are implemented.

In a fifth aspect, an embodiment of this application discloses a readable storage medium, storing a program or an instruction, and when the program or instruction is executed by a processor, the steps of the control method according to the second aspect are implemented.

In a sixth aspect, an embodiment of this application discloses a computer program product, stored in a non-volatile storage medium. The program product is configured to be executed by at least one processor to implement the steps of the control method according to the second aspect.

In a seventh aspect, an embodiment of this application discloses a chip, including a processor and a communication interface. The communication interface is coupled to the processor, and the processor is configured to run a program or instruction to implement the control method according to the second aspect.

The technical solutions adopted in this application can achieve the following beneficial effects:
according to the electronic device disclosed by the embodiment of this application, the structure of the electronic device in the background is improved, such that the display screen includes the first region and the second region, the portion of the second region is the deformable region, the deformation driving part is connected to the deformable region, such that when the electronic device is in the shooting mode, the deformable region can be driven by the deformation driving part to be gradually switched into the flattening state from the bending state, then, the ambient light passes through the light transmitting region and is projected into the camera module, and the camera module starts to work. When the camera module finishes working, and the electronic device is in a daily work mode (i.e., a non-shooting mode), the deformable region is driven by the deformation driving part to be gradually recovered to the bending state from the flattening state, the structure can prevent a front surface (i.e., the first region), towards a user, of the display screen from being provided with the light transmitting region, such that an effective display area of the electronic device can be increased. It is apparent that due to the electronic device disclosed by the embodiment of this application, the display area of the electronic device can be effectively increased, and the display effect of the electronic device is improved.

### BRIEF DESCRIPTION OF THE DRAWINGS

FIG. 1 is a schematic diagram of an electronic device in a bending state of a deformable region according to an embodiment of this application;
FIG. 2 is a section view of a part of structure cut out along a section A in FIG. 1;
FIG. 3 is a schematic diagram of an electronic device in a flattening state of a deformable region according to an embodiment of this application;
FIG. 4 is a section view of a part of structure in FIG. 3, single arrows indicate a light path in FIG. 4;
FIG. 5 is a schematic diagram of projection of ambient light when a T-lens structural member is thickened according to an embodiment of this application, in which single arrows indicate a light path, and double arrows indicate a T-lens thickness change direction or a motion direction of a camera module in FIG. 5;
FIG. 6 is a section view of a part B in FIG. 3 in a second shrinking state of a second elastic connection mechanism;
FIG. 7 is a section view of the part B in FIG. 3 in a second stretching state of the second elastic connection mechanism; and
FIG. 8 is a schematic diagram of a hardware structure of an electronic device according to an embodiment of this application.

Descriptions of reference numerals:
100-housing, 110-rear cover, 111-plane portion, and 112-bending portion;
200-display screen, 210-first region, 220-second region, 230-first folding mechanism, 221-deformable region, 222-light transmitting region, and 223-rigid region;
300-deformation driving part;
400-camera module;
500-first reflective member;
600-driving mechanism;
700-device inner cavity;
800-second elastic connection mechanism;
900-second reflective member; and
1200-electronic device, 1201-radio frequency unit, 1202-network module, 1203-audio output unit, 1204-input unit, 12041-graphics processing unit, 12042-microphone, 1205-sensor, 1206-display unit, 12061-display panel, 1207-user input unit, 12071-touch panel, 12072-another input device, 1208-interface unit, 1209-memory, 1210-processor, and 1211-power supply.

### DETAILED DESCRIPTION

To clearly state the objectives, technical solutions, and advantages of this application, the technical solutions of this application will be clearly and completely described below with reference to specific embodiments of this application and the accompanying drawings. Apparently, the described embodiments are only some embodiments rather than all the embodiments of this application. All other embodiments obtained by an ordinary person skilled in the art based on the embodiments of this application without creative efforts shall fall within the scope of protection of this application.

The technical solutions disclosed by the embodiments of this application are described in detail by combining drawings below.

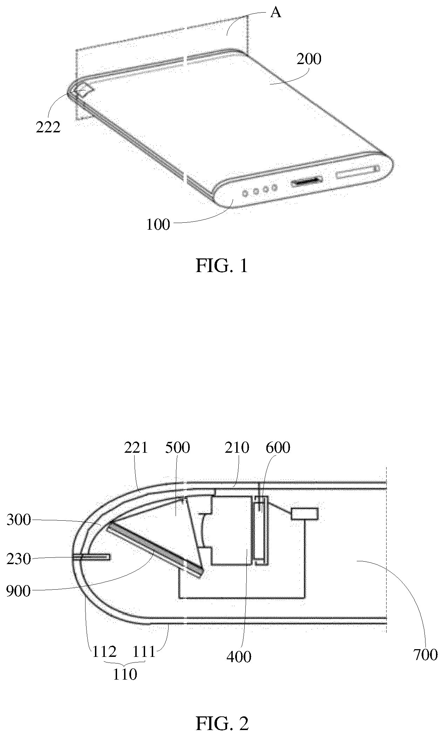

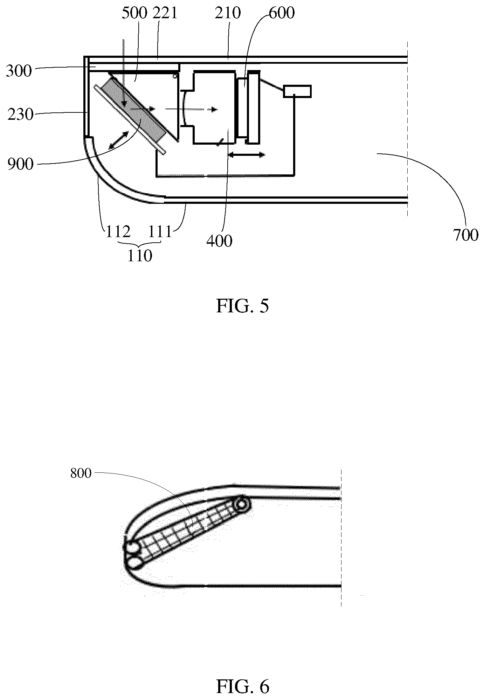

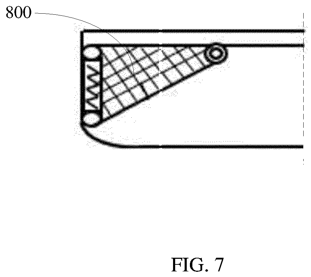

As shown in FIGS. 1 to 7, an embodiment of this application discloses an electronic device. The disclosed electronic device includes a housing 100, a display screen 200, a deformation driving part 300 and a camera module 400.

The housing 100 serves as a basic component of the electronic device, the housing 100 may provide an installation basis for some other components of the electronic device. The display screen 200 is disposed on the housing 100, a device inner cavity 700 is formed by the display screen 200 and the housing 100, the device inner cavity 700 is an installation space and can accommodate some other components of the electronic device, and the camera module 400 and the deformation driving part 300 are both disposed in the device inner cavity 700. In addition, the device inner cavity 700 may also protect some other components (e.g., a mainboard and a battery) of the electronic device.

The display screen 200 includes a first region 210 and a second region 220 which are connected, and a display surface of the first region 210 is a first plane, that is, an outer surface of the first region 210 is a plane. The second region 220 is located on an edge of the display screen 200, a portion of the second region 220 is a deformable region 221, and the deformable region 221 may be of a flexible screen structure.

The deformation driving part 300 is connected to the deformable region 221, and the deformation driving part 300 drives, through deformation, the deformable region 221 to be switched between a flattening state and a bending state. Specifically, when the electronic device is in a shooting mode, the deformation driving part 300 drives, through deformation, the deformable region 221 to be in the flattening state. When the electronic device is in a daily work mode (i.e., a non-shooting mode), the deformation driving part 300 drives, through deformation, the deformable region 221 to be in the bending state, and in the case, the display screen 200 becomes a curved screen, such as a waterfall screen. In an optional solution, the first region 210 and the second region 220 may be of an integrated structure. Of course, the first region 210 and the second region 220 may be of a split type structure, and may be assembled and connected in a bonding manner.

When the deformable region 221 is in the flattening state, the display surface of the deformable region 221 is a second plane, that is, an outer surface of the deformable region 221 is a plane, and the second plane and the first plane are located within the same plane. When the deformable region 221 is in the flattening state, the second plane and the first plane can realize display at the same time. When the deformable region 221 is in the bending state, the deformable region 221 is a curved surface. When the deformable region 221 is in the bending state, display is realized mainly through the first plane. A light transmitting region 222 is arranged in the deformable region 221, and when the deformable region 221 is in the flattening state, the ambient light passing through the light transmitting region 222 is projected to the camera module 400. Specifically, when the camera module 400 works and the deformable region 221 is in the flattening state, the ambient light passes through the light transmitting region 222 and is projected to the camera module 400.

In a specific working process, when the electronic device is in the shooting mode, the deformable region 221 is driven by the deformation driving part 300 to be gradually switched into the flattening state from the bending state, the ambient light passes through the light transmitting region 222 and is projected to the camera module 400, and the camera module 400 starts to work. When the electronic device is in the daily work mode (i.e., the non-shooting mode), the deformable region 221 is driven by the deformation driving part 300 to be gradually switched into the bending state from the flattening state, and the camera module 400 does not work.

According to the electronic device disclosed by the embodiment of this application, the structure of the electronic device in the background is improved, such that the display screen 200 includes the first region 210 and the second region 220 which are connected, and the portion of the second region 220 is the deformable region 221. The deformation driving part 300 is connected to the deformable region 221, such that when the electronic device is in the shooting mode, the deformable region 221 can be driven by the deformation driving part 300 to be gradually switched into the flattening state from the bending state, then, the ambient light passes through the light transmitting region 222 and is projected to the camera module 400, and the camera module 400 starts to work. The camera module 400 finishes working, and when the electronic device is in the daily work mode (i.e., the non-shooting mode), the deformable region 221 is driven by the deformation driving part 300 to be gradually recovered to the bending state from the flattening state. The structure can prevent a front surface (i.e., the first region 210), towards a user, of the display screen 200 from being provided with the light transmitting region 222, such that an effective display area of the electronic device can be increased. It is apparent that due to the electronic device disclosed by the embodiment of this application, the display area of the electronic device can be effectively increased, and the display effect of the electronic device is improved.

As mentioned above, when the deformable region 221 is in the flattening state, the ambient light passes through the light transmitting region 222 and is projected to the camera module 400, specifically, the camera module 400 may be arranged towards the light transmitting region 222, and in this case, the ambient light passing through the light transmitting region 222 can be directly projected to the camera module 400, thereby realizing shooting via the camera module 400.

In another optional solution, orientation of the light transmitting region 222 may intersect with orientation of the camera module 400. According to the claimed invention, a first reflective member 500 is disposed between the light transmitting region 222 and the camera module 400, and the ambient light passing through the light transmitting region 222 is reflected to the camera module 400 through the first reflective member 500. When the electronic device is in the shooting mode, the ambient light is first projected from the outside to the first reflective member 500 through the light transmitting region 222, and then, reflected to the camera module 400 through the first reflective member 500. In this case, by changing a set position of the camera module 400, the camera module 400 can be prevented from being arranged in a region covered with the deformable region 221, thereby facilitating bending deformation of the deformable region 221. Meanwhile, the first reflective member 500 can adjust a light path direction, the camera module 400 may be transversely arranged in the device inner cavity 700, such that a thickness of the electronic device can be effectively reduced, and the electronic device is lighter and thinner.

It is to be noted that transverse arrangement of the camera module 400 means that the orientation of the camera module 400 is perpendicular to the orientation of the first region 210, and the thickness direction of the electronic device refers to a size of the electronic device in a direction perpendicular to the first region 210.

In the embodiment of this application, the first reflective member 500 may be disposed in the device inner cavity 700 in a preset manner, such that light transmitted in the flattening state of the deformable region 221 can be right reflected by the first reflective member 500 at a preset position into the camera module 400. Specifically, the first reflective member 500 may be fixed into the device inner cavity 700 in a fixed manner, such as bonding and fixing through glue.

Still according to the claimed invention, the first reflective member 500 is connected to the deformation driving part 300, the deformation driving part 300 drives the first reflective member 500 to move to a working position, and the ambient light passing through the light transmitting region 222 is reflected by the first reflective member 500 at the working position to the camera module 400. In this case, the deformation driving part 300 may also realize adjustment on the position of the first reflective member 500 while driving the deformable region 221 to deform. It is apparent that the position of the first reflective member 500 can be adjusted according to deformation of the deformation driving part 300. Of course, when the deformation driving part 300 drives the deformable region 221 to bend, the first reflective member 500 is more easily arranged in a narrow environment on an inner side of the bent deformable region 221. Due to the manner, the narrow space in the device inner cavity 700 can be sufficiently utilized for arrangement, thereby achieving the purpose of sufficient space utilization and facilitating the structure of the electronic device to be more compact.

At the same time, because the deformation driving part 300 also drives the first reflective member 500 to move, it is unnecessary to arrange a driving device special for the first reflective member 500, thereby effectively reducing the usage quantity of components of the electronic device, making the electronic device lighter and cost lower.

In a further technical solution, the first reflective member 500 may be rotationally disposed on the inner side of the deformable region 221. The electronic device may further include a driving mechanism 600, and the driving mechanism 600 is disposed on the side of the camera module 400 facing away from the first reflective member 500, and the driving mechanism 600 drives the camera module 400 to push the first reflective member 500 to rotate, such that a light incident surface of the first reflective member 500 is closely attached to the inner side of the deformable region 221 in the flattening state. When the electronic device is in the shooting mode, the driving mechanism 600 can drive the camera module 400 to push the first reflective member 500 to rotate, such that the light incident surface of the first reflective member 500 is closely attached to the inner side of the deformable region 221 in the flattening state to play a certain supporting role on the flattened deformable region 221 and make the deformable region 221 flatter, thereby preventing bad influences of low flatness of the deformable region 221 on shooting, meanwhile, well correcting an incident direction of the ambient light, and achieving the purpose of optical image stabilization. The driving mechanism 600 may be a hydraulic telescopic member, an air pressure telescopic member, a piezoelectric structural member, a shape memory alloy structural member, etc., and the embodiment of this application does not limit a specific kind of the driving mechanism 600.

In another specific implementation, the first reflective member 500 is rotationally disposed on the inner side of the deformable region 221. The electronic device may further include a driving apparatus, and the driving apparatus is connected to the first reflective member 500 and drives the first reflective member 500 to rotate, such that the light incident surface of the first reflective member 500 faces the deformable region 221 in the flattening state. The structure specially arranges the driving apparatus for the first reflective member 500, such that independent control over the first reflective member 500 is facilitated, and meanwhile influences from other components can be avoided. In a similar way, the driving apparatus may be a driving motor, a hydraulic motor, etc., and the embodiment of this application does not limit a specific kind of the driving apparatus.

In the embodiment of this application, the first reflective member 500 may be a plane mirror, and may also be a reflective mechanism of another special-shaped structure (e.g., a triangular prism mentioned later), as long as the ambient light passing through the deformable region 221 in the flattening state is reflected to the camera module 400. The embodiment of this application does not limit a specific kind of the first reflective member 500.

In an optional solution, the first reflective member 500 may be the triangular prism, and a right-angled portion of the triangular prism is rotationally connected to the deformable region 221 or the deformation driving part 300, such that the deformation driving part 300 can adjust the position of the triangular prism. In the flattening state, a first right-angle surface of the triangular prism is arranged towards the deformable region 221, a second right-angle surface of the triangular prism is arranged towards the camera module 400, and the structure of the triangular prism better facilitates supporting of the deformable region 221, thereby making the deformable region 221 in the flattening state flatter.

In a further technical solution, the first region 210 has an inner surface facing away from the first plane, the inner surface is parallel to the first plane, and the camera module 400 is disposed on the inner surface in a sliding manner. The inner surface of the first region 210 is a plane so as to guide movement of the camera module 400, thereby better facilitating accurate movement of the camera module 400.

In the embodiment of this application, a second reflective member 900 may be attached to a bevel edge of the first reflective member 500, and the second reflective member 900 may be of a tunable lens (Tunable lens, T-lens) structural member, a middle layer of the T-lens structural member is made of electro-deformed material, and in the power-on state, a thickness of the electro-deformed material may change, and as a result, a thickness of the T-lens structural member may change as well. The ambient light passing through the light transmitting region 222 may be reflected into the camera module 400 sequentially through the first reflective member 500 and the second reflective member 900, and the second reflective member 900, in the power-on state, adjusts an angle of the ambient light through thickness adjustment. When the second reflective member 900 is in the power-on state, the thickness of the T-lens structural member may change, such that the angle of the ambient light projected into the camera module 400 through the first reflective member 500 and the second reflective member 900 changes, thereby achieving the purpose of optical image stabilization.

As mentioned above, the display screen 200 is disposed on the housing 100, and in the process of switchover of the deformable region 221 between the flattening state and the bending state, the deformable region 221 may move relative to the housing 100, such that a part where the deformable region 221 is connected to the housing 100 has a gap, which will bring problems about dustproof and waterproof. On that basis, in an optional solution, the electronic device may further include a first folding mechanism 230, the first folding mechanism 230 forms a sealing connection between the deformable region 221 and the housing 100, and when the deformable region 221 is in the flattening state, the first folding mechanism 230 is in an unfolding state; and when the deformable region 221 is in the bending state, the first folding mechanism 230 is in a folding state. The first folding mechanism 230 can plug the gap generated between the deformable region 221 and the housing 100 in the process of switching the deformable region into the flattening state from the bending state. Meanwhile, the first folding mechanism 230 forms a sealing connection between the deformable region 221 and the housing 100, and thus, when the deformable region 221 is in the flattening state, the first folding mechanism 230 may play a certain dustproof and waterproof role, and meanwhile appearance performance of the electronic device can be improved. At the same time, the first folding mechanism 230 may be made of a material (e.g., rubber) with good anti-fatigue performance, so as not to be prone to damage under long-term and multi-time switchover between the folding state and the unfolding state.

In another optional solution, the electronic device may further include a first elastic connection mechanism. The first elastic connection mechanism may be made of a telescopic material, such as silica gel and rubber. The first elastic connection mechanism forms a sealing connection between the deformable region 221 and the housing 100. When the deformable region 221 is in the flattening state, the first elastic connection mechanism is in a first stretching state, and when the deformable region 221 is in the bending state, the first elastic connection mechanism is in a first shrinking state. The first elastic connection mechanism can plug the gap generated when the deformable region 221 is changed into the flattening state from the bending state, meanwhile, the first elastic connection mechanism forms a sealing connection between the deformable region 221 and the housing 100, and thus, when the deformable region 221 is in the flattening state, the first elastic connection mechanism may further play a certain waterproof and dustproof role on the electronic device. At the same time, the first elastic connection mechanism realizes deformation through its own length, and cannot occupy a large space.

In the embodiment of this application, the second region 220 may further include a rigid region 223. The rigid region 223 and the deformable region 221 may be in a sealing connection through a second elastic connection mechanism 800. The second elastic connection mechanism 800 is similarly made of a telescopic material. When the deformable region 221 is in the flattening state, the second elastic connection mechanism 800 is in a second stretching state and seals a gap between the deformable region 221 and the rigid region 223, and meanwhile the second elastic connection mechanism 800 may further play a certain waterproof and dustproof role on the electronic device. When the deformable region 221 is in the bending state, the second elastic connection mechanism 800 is in a second shrinking state and is folded between the deformable region 221 and the rigid region 223. The second elastic connection mechanism 800 may be a silicon sheet, elastic cloth, etc.

In the embodiment of this application, the housing 100 may include a rear cover 110. The rear cover 110 may include a plane portion 111 and a bending portion 112, and the bending portion 112 is connected to the plane portion 111, such that a curve of the rear cover 110 of the electronic device is smoother and more attractive. When the deformable region 221 is in the bending state, the bending portion 112 is in linkage with the second region 220, and tangent lines at a joint of the bending portion 112 and the second region 220 are collinear. When the deformable region 221 is in the bending state, the bending portion 112 and the second region 220 of the rear cover 110 are in linkage with the same radian in the same plane, such that a side edge of the whole electronic device is smoother so as to be conveniently grabbed by a user during usage, thereby effectively improving the grabbing hand feeling of the user.

In a further technical solution, the first region 210 and the second region 220 may be both display regions, and light transmittance of the deformable region 221 may be greater than that of the first region 210. Both the first region 210 and the second region 220 can realize a display function, but the light transmittance of the deformable region 221 of the second region 220 is high, and thus the ambient light may be projected to the camera module 400 through the light transmitting region 222 of the deformable region 221, thereby further facilitating shooting during displaying.

Based on the electronic device disclosed by the embodiment of this application, an embodiment of this application discloses a control method of an electronic device. The control method is applicable to the above electronic device, and the disclosed control method includes the following steps.

Step 101: Receiving an input.

In the step, the input may be a voice input, a key input, etc. of a user.

Step 102: Controlling, when the input is a first input, a deformation driving part 300 to drive a deformable region 221 to be in a flattening state and control a camera module 400 to shoot.

In the step, an instruction that the first input is a shooting mode may be set, and when the input is the first input, the deformation driving part 300 drives the deformable region 221 to be gradually in the flattening state from a bending state, and ambient light is projected to the camera module 400 through a light transmitting region 222 of the deformable region 221, thereby realizing a shooting function.

Step 103: Controlling, when the input is a second input, the deformation driving part 300 to drive the deformable region 221 to be in the bending state.

In the step, an instruction that the second input is a daily work mode (i.e., a non-shooting mode) may be set, and when the input is the second input, the deformation driving part 300 drives the deformable region 221 to be gradually recovered to the bending state from the flattening state.

Based on the electronic device disclosed by the embodiment of this application, an embodiment of this application discloses a control apparatus of an electronic device. The control apparatus is applicable to the above electronic device, and the disclosed control apparatus includes:
a receiving module, configured to receive an input;
a first control module, configured to control, when the input is a first input, a deformation driving part 300 to drive a deformable region 221 to be in a flattening state and control a camera module 400 to shoot, where in a specific working process, the first control module controls the deformation driving part 300 to work, the deformation driving part 300 drives the deformable region 221 to be gradually in the flattening state from a bending state, and ambient light is projected to the camera module 400 through a light transmitting region 222 of the deformable region 221, thereby realizing a shooting function; and
a second control module, configured to control, when the input is a second input, the deformation driving part 300 to drive the deformable region 221 to be in the bending state, where in a specific working process, the second control module controls the deformation driving part 300 to work, and the deformation driving part 300 drives the deformable region 221 to be gradually recovered to the bending state from the flattening state.

The electronic device disclosed by the embodiment of this application may be a mobile phone, a tablet computer, an e-book reader, a game player, a wearable device, etc., and the embodiment of this application does not limit a specific kind of the electronic device.

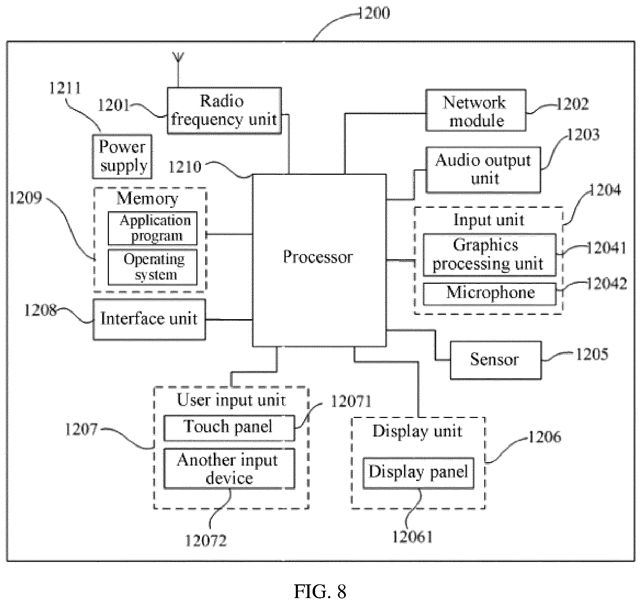

FIG. 8 is a schematic diagram of a hardware structure of an electronic device for implementing various embodiments of this application.

The electronic device 1200 includes but not limited to: components such as a radio frequency unit 1201, a network module 1202, an audio output unit 1203, an input unit 1204, a sensor 1205, a display unit 1206, a user input unit 1207, an interface unit 1208, a memory 1209, a processor 1210 and a power supply 1211. A person skilled in the art may understand that the structure of the electronic device 1200 shown in FIG. 8 does not limit the electronic device, and the electronic device may include more or fewer components than those shown in the figure, or combine some components, or adopt different component arrangements. In the embodiment of this application, the electronic device includes but not limited to a mobile phone, a tablet computer, a notebook computer, a palm computer, a vehicle-mounted terminal, a wearable device, a pedometer, etc.

The processor 1210 is configured to receive an input of the user input unit 1207, control, when the input is a first input, a deformation driving part 300 to drive a deformable region 221 to be in a flattening state and control a camera module 400 to shoot, and control, when the input is a second input, the deformation driving part 300 to drive the deformable region 221 to be in a bending state.

According to the electronic device disclosed by the embodiment of this application, the structure of the electronic device in the background is improved, such that the display screen 200 includes the first region 210 and the second region 220 which are connected, and the portion of the second region 220 is the deformable region 221. The deformation driving part 300 is connected to the deformable region 221, such that when the electronic device is in the shooting mode, the deformable region 221 can be driven by the deformation driving part 300 to be gradually switched into the flattening state from the bending state, then, the ambient light passes through the light transmitting region 222 and is projected to the camera module 400, and the camera module 400 starts to work. The camera module 400 finishes working, and when the electronic device is in the daily work mode (i.e., the non-shooting mode), the deformable region 221 is driven by the deformation driving part 300 to be gradually recovered to the bending state from the flattening state. The structure can prevent a front surface (i.e., the first region 210), towards a user, of the display screen 200 from being provided with the light transmitting region 222, such that an effective display area of the electronic device can be increased. It is apparent that due to the electronic device disclosed by the embodiment of this application, the display area of the electronic device can be effectively increased, and the display effect of the electronic device is improved.

It is to be understood that in the embodiments of this application, the radio frequency unit 1201 may be configured to receive and transmit a signal in an information receiving and transmitting process or a call process. Specifically, after downlink data from a base station is received, the downlink data is transmitted to the processor 1210 to be processed; in addition, uplink data is transmitted to the base station. Generally, the radio frequency unit 1201 includes but not limited to an antenna, at least one amplifier, a transceiver, a coupler, a low noise amplifier, a duplexer, etc. In addition, the radio frequency unit 1201 may further communicate with a network and another device through a wireless communication system.

The electronic device provides wireless broadband Internet access for a user by the network module 1202, for example, helps the user to receive and transmit an email, browse a webpage, and access stream media, and the like.

The audio output unit 1203 may convert audio data received by the radio frequency unit 1201 or the network module 1202 or stored in the memory 1209 into an audio signal and output the audio signal as sound. Moreover, the audio output unit 1203 may further provide an audio output (e.g., call signal receiving sound or message receiving sound) related to a specific function executed by the electronic device 1200. The audio output unit 1203 includes a loudspeaker, a buzzer, a receiver, etc.

The input unit 1204 is configured to receive the audio signal or a video signal. The input unit 1204 may include a graphics processing unit (Graphics Processing Unit, GPU) 12041 and a microphone 12042. The graphics processing unit 12041 processes image data of a static image or a video that is obtained by an image acquisition apparatus (e.g., a camera) in a video acquisition mode or an image acquisition mode. A processed image frame may be displayed on the display unit 1206. The image frame processed by the graphics processing unit 12041 may be stored in the memory 1209 (or another storage medium) or transmitted by the radio frequency unit 1201 or the network module 1202. The microphone 12042 may receive sound and be able to process such sound into audio data. The processed audio data may be converted, in a phone talk mode, into a format that may be transmitted to a mobile communication base station via the radio frequency unit 1201 for output.

The electronic device 1200 further includes at least one sensor 1205, such as an optical sensor, a motion sensor, and other sensors. Specifically, the optical sensor includes an ambient light sensor and a proximity sensor, where the ambient light sensor may adjust luminance of a display panel 12061 according to brightness of the ambient light, and the proximity sensor may switch off the display panel 12061 and/or backlight when the electronic device 1200 is moved to the ear. As one type of motion sensor, an accelerometer sensor may detect magnitude of accelerations in various directions (generally on three axes), may detect magnitude and direction of gravity when the accelerometer sensor is static, and may be configured to identify the attitude of the electronic device (e.g., screen orientation switching, a related game, and magnetometer attitude calibration), a function related to vibration identification (e.g., a pedometer and a knock), and the like. The sensor 1205 may further include a fingerprint sensor, a pressure sensor, an iris sensor, a molecular sensor, a gyroscope, a barometer, a hygrometer, a thermometer, an infrared sensor, etc., which are not described herein in detail.

The display unit 1206 is configured to display information input by the user or information provided for the user. The display unit 1206 may include a display panel 12061. The display panel 12061 may be configured in the form of a liquid crystal display (Liquid Crystal Display, LCD), an organic light-emitting diode (Organic Light-Emitting Diode, OLED), or the like.

The user input unit 1207 may be configured to receive input digit or character information, and generate key signal input related to the user setting and function control of the electronic device. Specifically, the user input unit 1207 includes a touch panel 12071 and another input device 12072. The touch panel 12071, also called a touchscreen, may collect touch operations by the user on or near the touch panel (e.g., an operation of the user on the touch panel 12071 or near the touch panel 12071 by using a finger or stylus or any suitable object or attachment). The touch panel 12071 may include two parts: a touch detection apparatus and a touch controller. The touch detection apparatus detects a touch orientation of the user, detects a signal brought by the touch operation, and transmits the signal to the touch controller; and the touch controller receives touch information from the touch detection apparatus, converts the touch information into contact coordinates, then transmits the contact coordinates to the processor 1210, and receives and executes a command transmitted by the processor 1210. In addition, the touch panel 12071 may be implemented by using various types, such as a resistive type, a capacitance type, an infrared type, and a surface acoustic wave type. Besides the touch panel 12071, the user input unit 1207 may further include the another input device 12072. Specifically, the another input device 12072 may include but not limited to a physical keyboard, a functional key (e.g., a volume control key or a switch key), a track ball, a mouse, and a joystick, which are not described herein in detail.

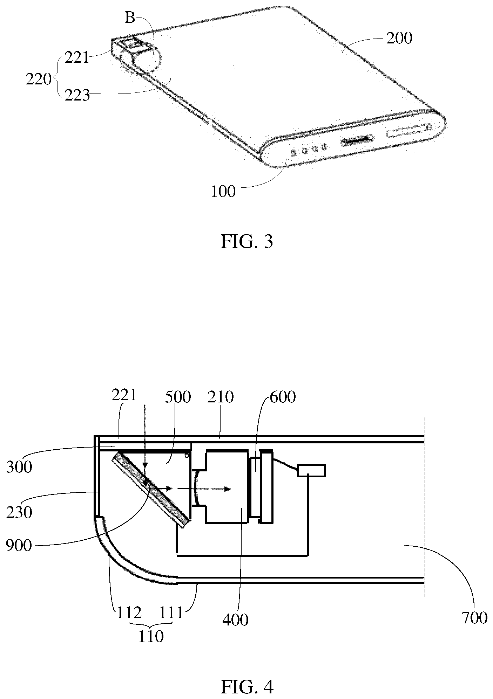

Further, the touch panel 12071 may cover the display panel 12061. After detecting a touch operation on or near the touch panel 12071, the touch panel transmits the touch operation to the processor 1210 to determine a type of a touch event. Then, the processor 1210 provides a corresponding visual output on the display panel 12061 according to the type of the touch event. Although, in FIG. 4, the touch panel 12071 and the display panel 12061 are used as two separate components to implement input and output functions of the electronic device, in some embodiments, the touch panel 12071 and the display panel 12061 may be integrated to implement the input and output functions of the electronic device, which are not specifically limited herein.

The interface unit 1208 is an interface for connecting an external apparatus to the electronic device 1200. For example, the external apparatus may include a wired or wireless headset port, an external power supply (or battery charger) port, a wired or wireless data port, a storage card port, a port configured to connect an apparatus having an identification module, an audio input/output (I/O) port, a video I/O port, an earphone port, and the like. The interface unit 1208 may be configured to receive an input (e.g., data information and electric power) from the external apparatus and transmit the received input to one or more elements of the electronic device 1200 or may be configured to transmit data between the electronic device 1200 and the external apparatus.

The memory 1209 may be configured to store software programs and various types of data. The memory 1209 may mainly include a program storage region and a data storage region. The program storage region may store an operating system, an application program required by at least one function (e.g., a sound play function and an image play function), and the like. The data storage region may store data (e.g., audio data and a phone book) created according to use of the electronic device. In addition, the memory 1209 may include a high-speed random access memory, and may further include a non-volatile memory, such as at least one magnetic disk storage device, a flash memory device, or another volatile solid-state storage device.

The processor 1210 is a control center of the electronic device, and is connected with various parts of the whole electronic device by using various interfaces and lines. By running or executing a software program and/or module stored in the memory 1209, and invoking data stored in the memory 1209, the processor performs various functions and data processing of the electronic device, thereby performing overall monitoring on the electronic device. The processor 1210 may include one or more processing units; and optionally, the processor 1210 may integrate an application processor and a modem processor, where the application processor mainly processes the operating system, a user interface, the application program, and the like, and the modem processor mainly processes wireless communication. It is to be understood that the modem processor may not be integrated into the processor 1210.

The electronic device 1200 may further include a power supply 1211 (e.g., a battery) for supplying power to the components. Optionally, the power supply 1211 may be logically connected to the processor 1210 by a power management system, thereby implementing functions such as charging, discharging, and power consumption management by the power management system.

In addition, the electronic device 1200 includes some functional modules that are not shown, which are not described herein again in detail.

Optionally, an embodiment of this application discloses a terminal device, including a processor 1210, a memory 1209, and a program or instruction stored in the memory 1209 and executable on the processor 1210, and when the program or instruction is executed by the processor 1210, the processes of any above method embodiment are implemented, and the same technical effects are achieved. To avoid repetition, details are not described herein again.

An embodiment of this application discloses a readable storage medium, storing a program or instruction. When the program or instruction is executed by a processor 1210, various processes of any above method embodiment are implemented, and the same technical effects are achieved. To avoid repetition, details are not described herein again. The readable storage medium may be a read-only memory (Read-Only Memory, ROM), a random access memory (Random Access Memory, RAM), a magnetic disk, or an optical disc, or the like.

An embodiment of this application discloses a computer program product, stored in a non-volatile storage medium. The program product is configured to be executed by at least one processor to implement the steps of the above control method.

An embodiment of this application discloses a chip, including a processor and a communication interface, the communication interface is coupled to the processor, and the processor is configured to run a program or instruction to implement the control method according to the above embodiment.

It is to be noted that terms "comprise", "include" or any other variation thereof in the specification is intended to cover a non-exclusive inclusion, such that a process, a method, an object or an apparatus including a series of elements not only includes those elements but also includes other elements not clearly listed, or further includes inherent elements for the process, the method, the object or the apparatus. Elements limited by a sentence "including a...", without more limitations, indicate that additional same elements may also exist in the process, the method, the object or the apparatus including the elements. In addition, it is to be noted that the scope of the method and the apparatus in the implementation of this application is not limited to the shown or discussed sequence to execute functions, and involved functions may also be executed basically at the same time or in an opposite sequence. For example, the described method may be executed according to a sequence different from the described sequence, and various steps may also be added, omitted or combined. In addition, features described in some examples may also be referred to be combined in other examples.

According to the descriptions in the foregoing implementations, a person skilled in the art may clearly learn that the method according to the foregoing embodiment may be implemented by software and a necessary general-purpose hardware platform or hardware, and in most cases, the former is a preferred implementation. Based on such an understanding, the technical solutions of this application essentially or the part contributing to the prior art may be embodied in a form of a software product. The computer software product is stored in a storage medium (e.g., a ROM/RAM, a magnetic disk and an optical disc) and includes several instructions for instructing an electronic device (which may be a mobile phone, a computer, a server, an air conditioner, or a network device, or the like) to perform the methods described in the embodiments of this application.

The above embodiments in this application mainly describe differences between the embodiments, different optimized features between the embodiments can be combined into a preferred embodiment as long as there are no contradictions, and considering the brevity, details are not described herein again.

## Claims

1. An electronic device, comprising a housing (100), a display screen (200), a deformation driving part (300) and a camera module (400), wherein
the display screen (200) is disposed on the housing (100), a device inner cavity (700) is formed by the display screen (200) and the housing (100), the camera module (400) and the deformation driving part (300) are both disposed in the device inner cavity (700);
the display screen (200) comprises a first region (210) and a second region (220) which are connected, a display surface of the first region (210) is a first plane, the second region (220) is located on an edge of the display screen (200), a portion of the second region (220) is a deformable region (221);
the deformation driving part (300) is connected to the deformable region (221), and drives, through deformation, the deformable region (221) to be switched between a flattening state and a bending state; in a case that the deformable region (221) is in the flattening state, a display surface of the deformable region (221) is a second plane, and the second plane and the first plane are located within the same plane; and in a case that the deformable region (221) is in the bending state, the deformable region (221) is a curved surface, a light transmitting region (222) is arranged in the deformable region (221); and in a case that the deformable region (221) is in the flattening state, ambient light passing through the light transmitting region (222) is projected to the camera module (400); **characterised in that**
a first reflective member (500) is disposed between the light transmitting region (222) and the camera module (400), the first reflective member (500) is connected to the deformation driving part (300), the deformation driving part (300) drives the first reflective member (500) to move to a working position, and the ambient light passing through the light transmitting region (222) is reflected by the first reflective member (500) at the working position to the camera module (400).

2. The electronic device according to claim 1, wherein orientation of the light transmitting region (222) intersects with orientation of the camera module (400).

3. The electronic device according to claim 1, wherein the first reflective member (500) is rotationally disposed on an inner side of the deformable region (221), the electronic device further comprises a driving apparatus, and the driving apparatus is connected to the first reflective member (500) and drives the first reflective member (500) to rotate, such that a light incident surface of the first reflective member (500) faces the deformable region (221) in the flattening state.

4. The electronic device according to claim 1, wherein the first reflective member (500) is rotationally disposed on an inner side of the deformable region (221), the electronic device further comprises a driving mechanism (600), and the driving mechanism (600) is disposed on a side of the camera module (400) facing away from the first reflective member (500), and drives the camera module (400) to push the first reflective member (500) to rotate, such that a light incident surface of the first reflective member (500) is closely attached to the inner side of the deformable region (221) in the flattening state.

5. The electronic device according to claim 4, wherein the first reflective member (500) is a triangular prism, a right-angled portion of the triangular prism is rotationally connected to the deformable region (221) or the deformation driving part (300); in the flattening state, a first right-angle surface of the triangular prism is arranged towards the deformable region (221), and a second right-angle surface of the triangular prism is arranged towards the camera module (400).

6. The electronic device according to claim 4, wherein the first region (210) has an inner surface facing away from the first plane, the inner surface is parallel to the first plane, and the camera module (400) is disposed on the inner surface in a sliding manner.

7. The electronic device according to claim 5, wherein a second reflective member (900) is attached to a bevel edge of the first reflective member (500), and is a T-lens structural member; the ambient light passing through the light transmitting region (222) sequentially passes through the first reflective member (500) and the second reflective member (900) to be reflected to the camera module (400); and the second reflective member (900), in a power-on state, adjusts an angle of the ambient light through thickness adjustment.

8. The electronic device according to claim 1, wherein the electronic device further comprises a first folding mechanism (230), the first folding mechanism (230) forms a sealing connection between the deformable region (221) and the housing (100); in a case that the deformable region (221) is in the flattening state, the first folding mechanism (230) is in a first unfolding state; and in a case that the deformable region (221) is in the bending state, the first folding mechanism (230) is in a first folding state.

9. The electronic device according to claim 1, wherein the electronic device further comprises a first elastic connection mechanism, the first elastic connection mechanism forms a sealing connection between the deformable region (221) and the housing (100); in a case that the deformable region (221) is in the flattening state, the first elastic connection mechanism is in a first stretching state; and in a case that the deformable region (221) is in the bending state, the first elastic connection mechanism is in a first shrinking state.

10. The electronic device according to claim 1, wherein the second region (220) further comprises a rigid region (223), the rigid region (223) and the deformable region (221) are in a sealing connection through a second elastic connection mechanism (800); in a case that the deformable region (221) is in the flattening state, the second elastic connection mechanism (800) is in a second stretching state and seals a gap between the deformable region (221) and the rigid region (223); and in a case that the deformable region (221) is in the bending state, the second elastic connection mechanism (800) is in a second shrinking state and is folded between the deformable region (221) and the rigid region (223).

11. The electronic device according to claim 1, wherein the housing (100) comprises a rear cover (110), the rear cover (110) comprises a plane portion (111) and a bending portion (112) that are connected, and in a case that the deformable region (221) is in the bending state, the bending portion (112) is in linkage with the second region (220), and tangent lines at a joint of the bending portion (112) and the second region (220) are collinear.

12. The electronic device according to claim 1, wherein both the first region (210) and the second region (220) are display regions, and light transmittance of the deformable region (221) is greater than that of the first region (210).

13. A control method of an electronic device, applied to the electronic device according to any one of claims 1 to 12, and comprising the steps of:
receiving an input;
controlling, in a case that the input is a first input, the deformation driving part (300) to drive the deformable region (221) to be in the flattening state and controlling the camera module (400) to shoot; and
controlling, in a case that the input is a second input, the deformation driving part (300) to drive the deformable region (221) to be in the bending state.

## Patentansprüche

1. Eine elektronische Vorrichtung, die ein Gehäuse (100), einen Anzeigeschirm (200), einen Verformungsantriebsteil (300) und ein Kameramodul (400) beinhaltet, wobei der Anzeigeschirm (200) auf dem Gehäuse (100) angeordnet ist, ein innerer Hohlraum (700) der Vorrichtung von dem Anzeigeschirm (200) und dem Gehäuse (100) gebildet ist, das Kameramodul (400) und der Verformungsantriebsteil (300) beide in dem inneren Hohlraum (700) der Vorrichtung angeordnet sind;
der Anzeigeschirm (200) einen ersten Bereich (210) und einen zweiten Bereich (220), die verbunden sind, beinhaltet, eine Anzeigefläche des ersten Bereichs (210) eine erste Ebene ist, sich der zweite Bereich (220) an einer Kante des Anzeigeschirms (200) befindet, ein Abschnitt des zweiten Bereichs (220) ein verformbarer Bereich ist (221); der Verformungsantriebsteil (300) mit dem verformbaren Bereich (221) verbunden ist und den verformbaren Bereich (221) durch Verformung dazu antreibt, zwischen einem flachen Zustand und einem gebogenen Zustand umgeschaltet zu werden; im Fall, dass sich der verformbare Bereich (221) in dem flachen Zustand befindet, eine Anzeigefläche des verformbaren Bereichs (221) eine zweite Ebene ist und sich die zweite Ebene und die erste Ebene innerhalb derselben Ebene befinden; und im Fall, dass sich der verformbare Bereich (221) in dem gebogenen Zustand befindet, der verformbare Bereich (221) eine gekrümmte Fläche ist, ein lichtdurchlässiger Bereich (222) in dem verformbaren Bereich (221) eingerichtet ist; und im Fall, dass sich der verformbare Bereich (221) in dem flachen Zustand befindet, durch den lichtdurchlässigen Bereich (222) laufendes Umgebungslicht zu dem Kameramodul (400) projiziert wird;
**dadurch gekennzeichnet, dass**
ein erstes reflektierendes Element (500) zwischen dem lichtdurchlässigen Bereich (222) und dem Kameramodul (400) angeordnet ist, das erste reflektierende Element (500) mit dem Verformungsantriebsteil (300) verbunden ist, der Verformungsantriebsteil (300) das reflektierende Element (500) dazu antreibt, sich in eine Arbeitsstellung zu bewegen, und das durch den lichtdurchlässigen Bereich (222) laufende Umgebungslicht von dem ersten reflektierenden Element (500) in der Arbeitsstellung zu dem Kameramodul (400) reflektiert wird.

2. Elektronische Vorrichtung gemäß Anspruch 1, wobei sich die Ausrichtung des lichtdurchlässigen Bereichs (222) mit der Ausrichtung des Kameramoduls (400) schneidet.

3. Elektronische Vorrichtung gemäß Anspruch 1, wobei das erste reflektierende Element (500) drehbar an einer inneren Seite des verformbaren Bereichs (221) angeordnet ist, die elektronische Vorrichtung ferner eine Antriebseinrichtung beinhaltet und die Antriebseinrichtung mit dem ersten reflektierenden Element (500) verbunden ist und das erste reflektierende Element (500) dazu antreibt, sich zu drehen, sodass eine Lichteinfallsfläche des ersten reflektierenden Elements (500) dem verformbaren Bereich (221) in dem flachen Zustand zugewandt ist.

4. Elektronische Vorrichtung gemäß Anspruch 1, wobei das erste reflektierende Element (500) drehbar an einer inneren Seite des verformbaren Bereichs (221) angeordnet ist, die elektronische Vorrichtung ferner einen Antriebsmechanismus (600) beinhaltet und der Antriebsmechanismus (600) an einer dem ersten reflektierenden Element (500) abgewandten Seite des Kameramoduls (400) angeordnet ist und das Kameramodul (400) dazu antreibt, das erste reflektierende Element (500) so zu drücken, dass es sich dreht, sodass eine Lichteinfallsfläche des ersten reflektierenden Elements (500) eng an der Innenseite des verformbaren Bereichs (221) in dem flachen Zustand angebracht ist.

5. Elektronische Vorrichtung gemäß Anspruch 4, wobei das erste reflektierende Element (500) ein Dreieckprisma ist, ein rechtwinkliger Abschnitt des Dreiecksprismas drehbar mit dem verformbaren Bereich (221) oder dem Verformungsantriebsteil (300) verbunden ist; in dem flachen Zustand eine erste Fläche des rechten Winkels des Dreiecksprismas zu dem verformbaren Bereich (221) hin eingerichtet ist und eine zweite Fläche des rechten Winkels des Dreiecksprismas zu dem Kameramodul (400) hin eingerichtet ist.

6. Elektronische Vorrichtung gemäß Anspruch 4, wobei der erste Bereich (210) eine innere Oberfläche aufweist, die der ersten Ebene abgewandt ist, die innere Oberfläche zu der ersten Ebene parallel ist und das Kameramodul (400) auf gleitende Weise an der inneren Oberfläche angeordnet ist.

7. Elektronische Vorrichtung gemäß Anspruch 5, wobei ein zweites reflektierendes Element (900) an einer schrägen Kante des ersten reflektierenden Elements (500) angebracht ist und ein strukturelles T-Linsenelement ist; das durch den lichtdurchlässigen Bereich (222) laufende Umgebungslicht nacheinander durch das erste reflektierende Element (500) und das zweite reflektierende Element (900) läuft, um zu dem Kameramodul (400) reflektiert zu werden; und das zweite reflektierende Element (900) in einem eingeschalteten Zustand einen Winkel des Umgebungslichts durch Dickenverstellung verstellt.

8. Elektronische Vorrichtung gemäß Anspruch 1, wobei die elektronische Vorrichtung ferner einen ersten Faltmechanismus (230) beinhaltet, der erste Faltmechanismus (230) eine dichtende Verbindung zwischen dem verformbaren Bereich (221) und dem Gehäuse (100) bildet; im Fall, dass sich der verformbare Bereich (221) in dem flachen Zustand befindet, sich der erste Faltmechanismus (230) in einem ersten aufgefalteten Zustand befindet; und im Fall, dass sich der verformbare Bereich (221) in dem gebogenen Zustand befindet, sich der erste Faltmechanismus (230) in einem ersten gefalteten Zustand befindet.

9. Elektronische Vorrichtung gemäß Anspruch 1, wobei die elektronische Vorrichtung ferner einen ersten elastischen Verbindungsmechanismus beinhaltet, der erste elastische Verbindungsmechanismus eine dichtende Verbindung zwischen dem verformbaren Bereich (221) und dem Gehäuse (100) bildet; im Fall, dass sich der verformbare Bereich (221) in dem flachen Zustand befindet, sich der erste elastische Verbindungszustand in einem ersten gedehnten Zustand befindet; und im Fall, dass sich der verformbare Bereich (221) in dem gebogenen Zustand befindet, sich der erste elastische Verbindungsmechanismus in einem ersten zusammengezogenen Zustand befindet.

10. Elektronische Vorrichtung gemäß Anspruch 1, wobei der zweite Bereich (220) ferner einen starren Bereich (223) beinhaltet, sich der starre Bereich (223) und der verformbare Bereich (221) durch einen zweiten elastischen Verbindungsmechanismus (800) in dichtender Verbindung befinden; im Fall, dass sich der verformbare Bereich (221) in dem flachen Zustand befindet, sich der zweite elastische Verbindungsmechanismus (800) in einem zweiten gedehnten Zustand befindet und einen Zwischenraum zwischen dem verformbaren Bereich (221) und dem starren Bereich (223) dichtet; und im Fall, dass sich der verformbare Bereich (221) in dem gebogenen Zustand befindet, sich der zweite elastische Verbindungsmechanismus (800) in einem zweiten zusammengezogenen Zustand befindet und zwischen dem verformbaren Bereich (221) und dem starren Bereich (223) gefaltet ist.

11. Elektronische Vorrichtung gemäß Anspruch 1, wobei das Gehäuse (100) eine hintere Abdeckung (110) beinhaltet, die hintere Abdeckung (110) einen ebenen Abschnitt (111) und einen gebogenen Abschnitt (112), die verbunden sind, beinhaltet, und im Fall, dass sich der verformbare Bereich (221) in dem gebogenen Zustand befindet, der gebogene Abschnitt (112) mit dem zweiten Bereich (220) zusammenhängend ist und Tangenten an einer Verbindungsstelle des gebogenen Abschnitts (112) und des zweiten Bereichs (220) kollinear sind.

12. Elektronische Vorrichtung gemäß Anspruch 1, wobei sowohl der erste Bereich (210) als auch der zweite Bereich (220) Anzeigebereiche sind und die Lichtdurchlässigkeit des verformbaren Bereichs (221) größer als diejenige des ersten Bereichs (210) ist.

13. Ein Steuerverfahren einer elektronischen Vorrichtung, angewandt auf die elektronische Vorrichtung gemäß einem der Ansprüche 1 bis 12 und die folgenden Schritte beinhaltend:
Empfangen einer Eingabe;
Steuern, im Fall, dass die Eingabe eine erste Eingabe ist, des Verformungsantriebsteils (300) dazu, den verformbaren Bereich (221) dazu anzutreiben, sich in dem flachen Zustand zu befinden, und Steuern des Kameramoduls (400) dazu, zu schießen; und
Steuern, im Fall, dass die Eingabe eine zweite Eingabe ist, des Verformungsantriebsteils (300) dazu, den verformbaren Bereich (221) dazu anzutreiben, sich in dem gebogenen Zustand zu befinden.

## Revendications

1. Un dispositif électronique, comprenant un boîtier (100), un écran d'affichage (200), une partie d'entraînement de déformation (300) et un module caméra (400), où l'écran d'affichage (200) est disposé sur le boîtier (100), une cavité intérieure de dispositif (700) est formée par l'écran d'affichage (200) et le boîtier (100), le module caméra (400) et la partie d'entraînement de déformation (300) sont tous deux disposés dans la cavité intérieure de dispositif (700) ;
l'écran d'affichage (200) comprend une première région (210) et une deuxième région (220) qui sont raccordées, une surface d'affichage de la première région (210) est un premier plan, la deuxième région (220) est située sur un bord de l'écran d'affichage (200), une portion de la deuxième région (220) est une région déformable (221) ;
la partie d'entraînement de déformation (300) est raccordée à la région déformable (221), et entraîne, par déformation, la région déformable (221) à être permutée entre un état d'aplatissement et un état de fléchissement ; dans un cas dans lequel la région déformable (221) est dans l'état d'aplatissement, une surface d'affichage de la région déformable (221) est un deuxième plan, et le deuxième plan et le premier plan sont situés dans le même plan ; et dans un cas dans lequel la région déformable (221) est dans l'état de fléchissement, la région déformable (221) est une surface incurvée, une région de transmission de lumière (222) est agencée dans la région déformable (221) ; et dans un cas dans lequel la région déformable (221) est dans l'état d'aplatissement, la lumière ambiante passant par la région de transmission de lumière (222) est projetée vers le module caméra (400) ;
**caractérisé en ce que**
un premier élément réfléchissant (500) est disposé entre la région de transmission de lumière (222) et le module caméra (400), le premier élément réfléchissant (500) est raccordé à la partie d'entraînement de déformation (300), la partie d'entraînement de déformation (300) entraîne le premier élément réfléchissant (500) à se déplacer jusqu'à une position de travail, et la lumière ambiante passant par la région de transmission de lumière (222) est réfléchie par le premier élément réfléchissant (500) au niveau de la position de travail vers le module caméra (400).

2. Le dispositif électronique selon la revendication 1, où l'orientation de la région de transmission de lumière (222) coupe l'orientation du module caméra (400).

3. Le dispositif électronique selon la revendication 1, où le premier élément réfléchissant (500) est disposé en rotation sur un côté intérieur de la région déformable (221), le dispositif électronique comprend en outre un appareil d'entraînement, et l'appareil d'entraînement est raccordé au premier élément réfléchissant (500) et entraîne le premier élément réfléchissant (500) à tourner, de telle sorte qu'une surface d'incidence de lumière du premier élément réfléchissant (500) fait face à la région déformable (221) dans l'état d'aplatissement.

4. Le dispositif électronique selon la revendication 1, où le premier élément réfléchissant (500) est disposé en rotation sur un côté intérieur de la région déformable (221), le dispositif électronique comprend en outre un mécanisme d'entraînement (600), et le mécanisme d'entraînement (600) est disposé sur un côté du module caméra (400) opposé au premier élément réfléchissant (500), et entraîne le module caméra (400) à pousser le premier élément réfléchissant (500) à tourner, de telle sorte qu'une surface d'incidence de lumière du premier élément réfléchissant (500) est étroitement reliée au côté intérieur de la région déformable (221) dans l'état d'aplatissement.

5. Le dispositif électronique selon la revendication 4, où le premier élément réfléchissant (500) est un prisme triangulaire, une portion à angle droit du prisme triangulaire est raccordée en rotation à la région déformable (221) ou à la partie d'entraînement de déformation (300) ; dans l'état d'aplatissement, une première surface à angle droit du prisme triangulaire est agencée vers la région déformable (221), et une deuxième surface à angle droit du prisme triangulaire est agencée vers le module caméra (400).

6. Le dispositif électronique selon la revendication 4, où la première région (210) a une surface intérieure opposée au premier plan, la surface intérieure est parallèle au premier plan, et le module caméra (400) est disposé sur la surface intérieure d'une manière coulissante.

7. Le dispositif électronique selon la revendication 5, où un deuxième élément réfléchissant (900) est relié à un bord biseauté du premier élément réfléchissant (500), et est un élément structurel de lentille en T ; la lumière ambiante passant par la région de transmission de lumière (222) passe séquentiellement par le premier élément réfléchissant (500) et le deuxième élément réfléchissant (900) pour être réfléchie vers le module caméra (400) ; et le deuxième élément réfléchissant (900), dans un état de mise sous tension, règle un angle de la lumière ambiante par réglage d'épaisseur.

8. Le dispositif électronique selon la revendication 1, où le dispositif électronique comprend en outre un premier mécanisme de pliage (230), le premier mécanisme de pliage (230) forme un raccordement de scellement entre la région déformable (221) et le boîtier (100) ; dans un cas dans lequel la région déformable (221) est dans l'état d'aplatissement, le premier mécanisme de pliage (230) est dans un premier état de dépliage ; et dans un cas dans lequel la région déformable (221) est dans l'état de fléchissement, le premier mécanisme de pliage (230) est dans un premier état de pliage.

9. Le dispositif électronique selon la revendication 1, où le dispositif électronique comprend en outre un premier mécanisme de raccordement élastique, le premier mécanisme de raccordement élastique forme un raccordement de scellement entre la région déformable (221) et le boîtier (100) ; dans un cas dans lequel la région déformable (221) est dans l'état d'aplatissement, le premier mécanisme de raccordement élastique est dans un premier état d'étirement ; et dans un cas dans lequel la région déformable (221) est dans l'état de fléchissement, le premier mécanisme de raccordement élastique est dans un premier état de rétraction.

10. Le dispositif électronique selon la revendication 1, où la deuxième région (220) comprend en outre une région rigide (223), la région rigide (223) et la région déformable (221) sont en raccordement de scellement par l'intermédiaire d'un deuxième mécanisme de raccordement élastique (800) ; dans un cas dans lequel la région déformable (221) est dans l'état d'aplatissement, le deuxième mécanisme de raccordement élastique (800) est dans un deuxième état d'étirement et scelle un espace entre la région déformable (221) et la région rigide (223) ; et dans un cas dans lequel la région déformable (221) est dans l'état de fléchissement, le deuxième mécanisme de raccordement élastique (800) est dans un deuxième état de rétraction et est plié entre la région déformable (221) et la région rigide (223).

11. Le dispositif électronique selon la revendication 1, où le boîtier (100) comprend un couvercle arrière (110), le couvercle arrière (110) comprend une portion plane (111) et une portion de fléchissement (112) qui sont raccordées, et dans un cas dans lequel la région déformable (221) est dans l'état de fléchissement, la portion de fléchissement (112) est en liaison avec la deuxième région (220), et des lignes tangentes au niveau d'une jonction de la portion de fléchissement (112) et de la deuxième région (220) sont colinéaires.

12. Le dispositif électronique selon la revendication 1, où à la fois la première région (210) et la deuxième région (220) sont des régions d'affichage, et la transmittance de lumière de la région déformable (221) est supérieure à celle de la première région (210).

13. Un procédé de commande d'un dispositif électronique, appliqué au dispositif électronique selon l'une quelconque des revendications 1 à 12, et comprenant les étapes suivantes :
la réception d'une entrée ;
la commande, dans un cas dans lequel l'entrée est une première entrée, de la partie d'entraînement de déformation (300) pour entraîner la région déformable (221) afin qu'elle soit dans l'état d'aplatissement et la commande du module caméra (400) pour qu'il fasse une prise de vues ; et
la commande, dans un cas dans lequel l'entrée est une deuxième entrée, de la partie d'entraînement de déformation (300) pour entraîner la région déformable (221) afin qu'elle soit dans l'état de fléchissement.
